# EUROPÄISCHE PATENTSCHRIFT

(11) **EP 1 060 275 B1**
(45) Veröffentlichungstag und Bekanntmachung des Hinweises auf die Patenterteilung: **09.01.2002**
(21) Anmeldenummer: 99911690.8
(22) Anmeldetag: 19.02.1999
(51) Int. Cl.: C21C 5/56, F27D 13/00, F27B 3/18, C21C 5/52

(54) **CHARGIERGUTVORWÄRMER MIT AUSWECHSELBAREN SCHACHTWANDABSCHNITTEN**
DEVICE FOR PREHEATING CHARGING STOCK, COMPRISING REPLACEABLE STACK WALL SECTIONS
DISPOSITIF POUR PRECHAUFFER UNE CHARGE D'ALIMENTATION, COMPORTANT DES SECTIONS DE PAROIS DE PUITS REMPLACABLES

(30) Priorität: 23.02.1998 DE 19807590
(43) Veröffentlichungstag der Anmeldung: 20.12.2000
(73) Patentinhaber: ARCMET TECHNOLOGIE GMBH, 4030 Linz (AT)
(72) Erfinder: FUCHS, Gerhard, D-77694 Kehl (DE)
(74) Vertreter: Blumbach, Kramer & Partner GbR
(86) Internationale Anmeldenummer: EP9901101
(87) Internationale Veröffentlichungsnummer: WO9942625

(56) Entgegenhaltungen:
- WO-A-90/10086
- WO-A-95/04910
- DE-A- 19 634 348
- US-A- 3 632 094

## Beschreibung

### Technisches Gebiet

Die Erfindung betrifft einen Chargiergutvorwärmer zum Vorwärmen von in ein Ofengefäß zu chargierendes Einsatzmaterial gemäß dem Oberbegriff von Patentanspruch 1.

### Stand der Technik

Ein Chargiergutvorwärmer dieser Art ist beispielsweise in der WO-A1-95/04910 beschrieben. Ein vorteilhafter Einsatz eines gattungsgemäßen Chargiergutvorwärmers ist in der WO-A-90/10086 beschrieben. Hier ist ein äußeres Segment des Gefäßdeckels eines Lichtbogenofens durch einen, in einer Haltekonstruktion befestigten Schacht ersetzt, durch den die heißen Ofengase hindurchgeleitet werden können. Sie erhitzen im Wärmeaustausch das sich im Schacht befindliche Einsatzmaterial und ermöglichen eine wesentliche Energieeinsparung. Der Querschnitt des schachtförmigen Chargiergutvorwärmers kann rund oder oval mit einer einzigen Schachtwand ausgebildet sein. Vorzugsweise ist er mit viereckigem, also polygonalem Querschnitt ausgebildet, so daß der Aufnahmeraum für das zu erhitzende Einsatzmaterial durch vier Schachtwände begrenzt wird.

Die Schachtwand bzw. die Schachtwände bekannter Chargiergutvorwärmer sind entweder aus Feuerfest-Material (ff-Material), wie feuerfeste Steine, einer feuerfesten Spritz- oder Gießmasse oder aber aus wassergekühlten Stahlwandelementen, vorzugsweise in Form von Rohrpanels gebildet.

Bestehen die Schachtwände auf der dem Innenraum des Chargiergutvorwärmers zugewandten Innenseite aus ff-Material, dann ist diese Innenseite bei einer mechanischen Beanspruchung, wie sie beim Beschicken des Schachtes auftritt. einem stärkeren Verschleiß und der Gefahr einer stärkeren Beschädigung ausgesetzt als wassergekühlte Stahlwandelemente.

Man ist deshalb, und auch aus Gewichtsgründen dazu übergegangen, die Schachtwände als flüssigkeitsgekühlte Stahlwände, insbesondere in Form von an einen Kühlkreislauf anschließbaren Rohrpanels auszubilden.

Wie bereits erwähnt, sind die Innenseiten der Schachtwände beim Beschickungsvorgang mit Einsatzmaterial hohen mechanischen Beanspruchungen ausgesetzt und dies insbesondere dann, wenn auch Schwerschrott als Einsatzmaterial verwendet wird. Enthält der Schwerschrott beispielsweise auf Stücke angeschnittene und gebrochene Eisenbahnschienen, so können die scharfen Kanten solcher Schienenstücke, wenn sie von einem über die obere Beschickungsöffnung des Schachtes gefahrenen Chargierkorb in den Schacht entleert werden, bei einer Schachtwand aus ff-Material größere Stücke aus der Innenseite der Wand brechen. Auch bei Rohrpanels, die eine wesentlich höhere mechanische Beanspruchbarkeit aufweisen, können durch derartige Beanspruchungen gravierende Schäden, wie Leckagen entstehen.

Obwohl grundsätzlich die Gefahr einer Beschädigung der Innenseite der Schachtwände im unteren Bereich des Schachtes größer als im oberen Bereich ist, weil im unteren Bereich die kinetische Energie der von oben in den Schacht fallenden Schrotteile größer ist, ist nicht gezielt vorherbestimmbar, an welchen Stellen im Betrieb Schäden auftreten, die repariert werden müssen, so daß auch nicht durch eine vorsorgliche Verstärkung solcher Stellen einer erforderlich werdenden örtlichen Reparatur der Innenseite der Schachtwand vorgebeugt werden kann.

Wird eine Reparatur erforderlich, so kommt es insbesondere bei feuerfesten Wänden wegen der notwendigen Abkühlzeit zu längeren Stillstandszeiten des Chargiergutvorwärmers. Auch das Beseitigen von Leckagen bei wassergekühlten Wänden macht wegen der Abschaltung des Wasserkreislaufs und der notwendigen Schweißarbeiten unerträglich lange Stillstandszeiten erforderlich.

Soweit mechanisch stärker beanspruchbare, flüssigkeitsgekühlte Stahlwände eingesetzt werden, ist dies im Vergleich zu Wänden, bei denen die Innenseite eine feuerfeste Auskleidung aufweist, mit Energieverlusten verbunden. Für die Schachtkühlung eines mittelgroßen Ofens sind ca. 700 m³ Kühlwasser pro Stunde erforderlich. Im Mittel wird das Kühlwasser um 5 °C bis 6 °C aufgeheizt. Daraus läßt sich ableiten, daß bei 75 t Flüssigstahl, die in 45 min erzeugt werden, der mittlere Energieverlust im Kühlwasser etwa 3.360 kWh beträgt, d. h. etwa 45 kWh pro Tonne Flüssigstahl. Im Hinblick auf eine Verringerung der Energieverluste wäre es wünschenswert, die robusteren flüssigkeitsgekühlten Stahlwände durch Schachtwände aus ff-Material zu ersetzen. Dem stehen eine größere Reparaturanfälligkeit und längere Stillstandszeiten entgegen.

Durch die US 3 632 094 A ist ein Chargiergutvorwärmer bekannt geworden, der aus zwei gleichartig aufgebauten, schachtförmigen Einheiten besteht, die beidseitig und symmetrisch an einem mittleren Abschnitt befestigbar sind, der eine gasdurchlässige Trennwand aufweist und um 180 ° drehbar ist. Hierdurch soll zur Verminderung von Verschleiß und Abrieb vermieden werden, daß, wie beim Chargiergutvorwärmer gemäß dem Oberbegriff des Patentanspruches 1 das Einsatzmaterial von einer im oberen Bereich vorhandenen Beschickungsöffnung durch den gesammten Schacht bis zu einer im unteren Bereich des Schachtes vorgesehenen Austrittsöffnung bewegt werden muß, und es wird erreicht, daß in den beiden Abschnitten unterschiedliche Arten von Einsatzmaterial in zwei Stufen erhitzt werden können, bevor das Einsatzmaterial zu einem Schmelzgefäß transportiert und dort chargiert wird.

Für den Betrieb des bekannten Chargiergutvorwärmers ist es erforderlich, daß ein um 180 ° drehbarer Mittelabschnitt mit gasdurchlässiger Trennwand vorgesehen ist und eine Vorrichtung, die nach dem Entleeren einer Einheit die Drehung ausführt. Im Hinblick auf die hohe mechanische Beanspruchung beim Drehvorgang ist der bekannte Chargiergutvorwärmer nur zum Vorwärmen kleinerer Chargiergutmengen geeignet.

### Darstellung der Erfindung

Aufgabe der Erfindung ist es, bei einem Chargiergutvorwärmer gemäß dem Oberbegriff des Patentanspruches 1 die Reparatur- und Stillstandszeiten und damit auch die Kosten bei örtlichen reparaturbedürftigen Beschädigungen der Innenseite des Schachtes, insbesondere bei Schachtwänden aus ff-Material zu verringern. Ferner sollen im Vergleich zu einem aus flüssigkeitsgekühlten Stahlwänden bestehenden Schacht die Energieverluste verringert werden.

Die Aufgabe ist durch Merkmale des Anspruches 1 gelöst. Vorteilhafte Ausgestaltungen der Erfindung sind den übrigen Ansprüchen zu entnehmen.

Bei dem erfindungsgemäßen Chargiergutvorwärmer ist die Schachtwand bzw. sind bei polygonalem Querschnitt des Schachtes die einzelnen Schachtwände in Schachtwandabschnitte unterteilt, die individuell auswechselbar in einer Rahmenkonstruktion befestigt sind. Dies erlaubt einerseits den Schacht an der Innenseite an einzelnen Stellen, an denen eine geringere mechanische Beanspruchung zu erwarten ist, insbesondere im oberen Bereich, mit ff-Material auszukleiden bzw. aus feuerfesten Platten zu bilden, während an stärker beanspruchten Stellen robustere Stahlwandelemente eingesetzt werden. Es ermöglicht andererseits einen schnellen Wechsel beschädigter Schachtwandabschnitte unabhängig davon, ob es sich um einen reparaturbedürftigen Schachtwandabschnitt aus ff-Material oder ein leckendes Rohrpanel handelt. Vorzugsweise werden im Hinblick auf die Lagerhaltung von Ersatzschachtwandabschnitten diese so bemessen, daß die Anzahl verschiedener Größen minimiert ist.

Als besonders vorteilhaft haben sich Schachtwandabschnitte erwiesen, die an ihrer Außenseite Abstützflächen aufweisen, mit denen sie beim Einhängen in die Rahmenkonstruktion an entsprechenden Gegenlagern dieser Rahmenkonstruktion anliegen. Die Rahmenkonstruktion ist vorzugsweise anhebbar/absenkbar in einer Haltevorrichtung gelagert, durch die der Schacht aus einer Position oberhalb eines Ofengefäßes zur Seite gefahren oder geschwenkt werden kann. Muß ein beschädigter Schachtwandabschnitt ausgewechselt werden, so wird der Schacht aus der Betriebsposition oberhalb des Ofengefäßes zur Seite gefahren und der beschädigte Schachtwandabschnitt durch einen neuen oder reparierten ersetzt. Nach dem Zurückfahren des Schachtes ist der Chargiergutvorwärmer wieder betriebsbereit.

Schachtwandabschnitte aus flüssigkeitsgekühlten Stahlwandelementen sollen zur Beschleunigung des Auswechselvorganges individuell vom Kühlkreislauf abschaltbar sein.

### Kurze Beschreibung der Zeichnungen

Die Erfindung wird durch ein Ausführungsbeispiel anhand von neun Figuren näher erläutert. Das Ausführungsbeispiel beschreibt den Einsatz des erfindungsgemäßen Chargiergutvorwärmers bei einem umgebauten Lichtbogenofen mit rundem Untergefäß, bei dem die Platzverhältnisse für den neben den Elektroden anzuordnenden Schacht begrenzt sind, wodurch die Rückhalteorgane im Schacht so ausgebildet sind, daß beim Befüllen des Schachtes die elektrodenseitige Wand besonders hohen mechanischen Beanspruchungen ausgesetzt ist.

Es zeigen jeweils in schematischer Darstellung
- Fig. 1: ein Einschmelzaggregat aus einem Lichtbogenofen und einem seitlich neben den Elektroden aufgesetzten Chargiergutvorwärmer bei geschlossenem Gefäßdeckel,
- Fig. 2: dieses Aggregat bei entferntem Schacht,
- Fig. 3: eine Draufsicht des Einschmelzaggregates mit dem in Fig. 2 eingezeichneten Schnitt III - III des Schachtes,
- Fig. 4: den Schnitt IV - IV von Fig. 3 mit über dem Ofengefäß angeordnetem Schacht,
- Fig. 5: einen vergrößerten Ausschnitt von Fig. 4,
- Fig. 6: einen vergrößerten Ausschnitt von Fig. 5, der die Befestigung der Schachtwandabschnitte in der Rahmenkonstruktion erkennen läßt,
- Fig. 7: eine der Fig. 6 entsprechende Darstellung eines modifizierten Schachtwandabschnittes,
- Fig. 8 und Fig. 9: jeweils stark schematisiserte perspektivische Darstellungen der zum Verständnis relevanten Teile des über einem Ofengefäß angeordneten Schachtes teilweise im Schnitt.

### Wege zur Ausführung der Erfindung

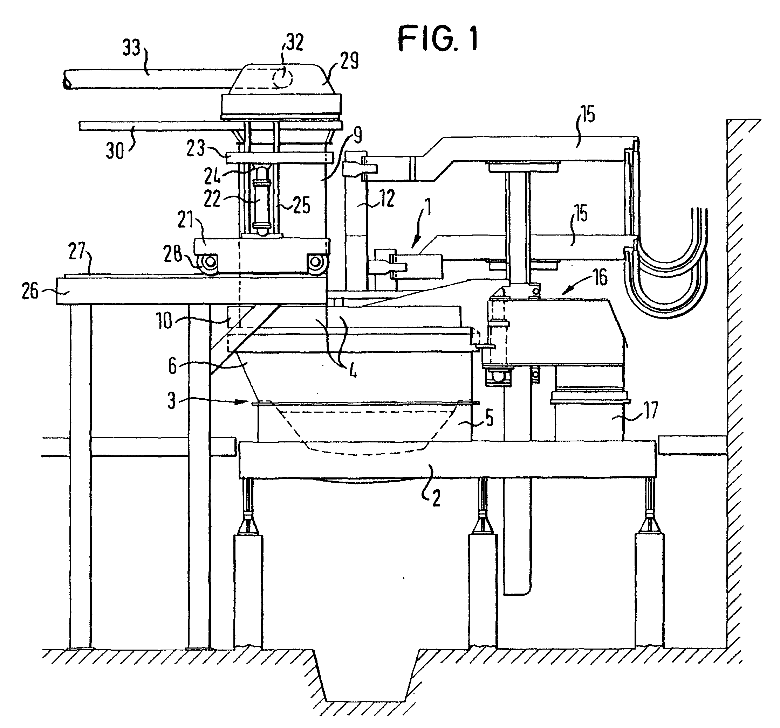

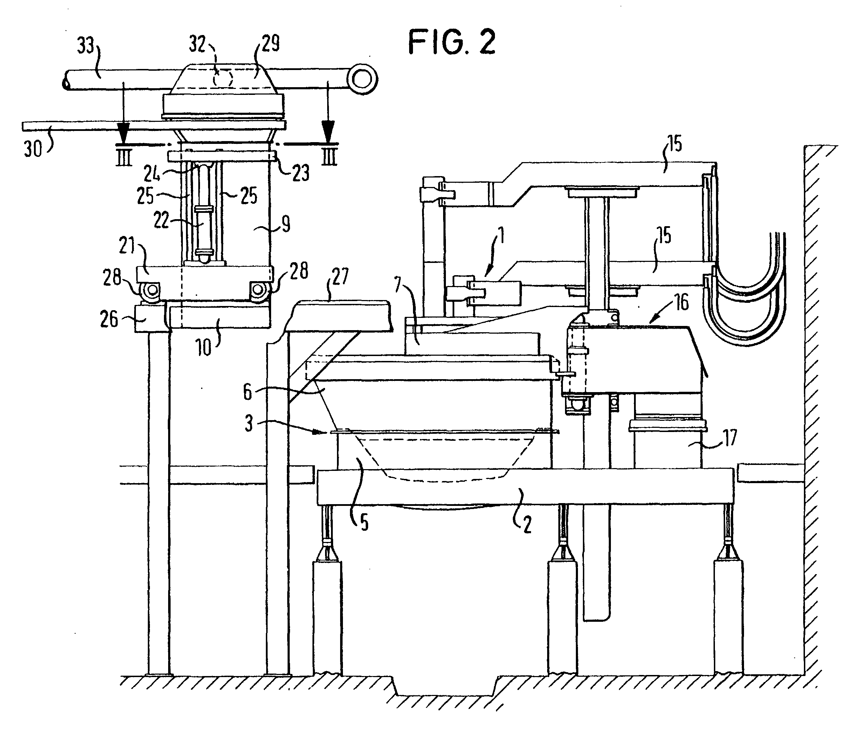

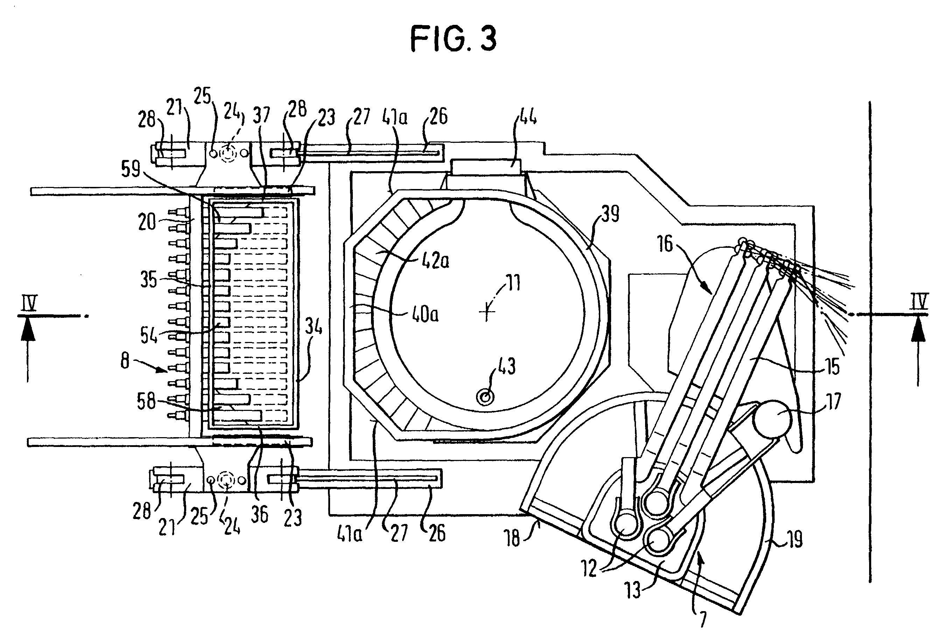

Das in den Fig. 1 bis 5 dargestellte Einschmelzaggregat enthält einen Lichtbogenofen 1 mit einem auf einer Ofenwiege 2 gelagerten Ofengefäß 3 und einem den oberen Rand des Ofengefäßes abdeckenden Gefäßdeckel 4, der gewölbeartig ausgebildet ist. Das Ofengefäß 3 besteht aus einem, den gemauerten Ofenherd bildenden Gefäßunterteil 5 zur Aufnahme der Schmelze und aus einem Gefäßoberteil 6, das üblicherweise aus wassergekühlten Elementen gebildet ist. Wie insbesondere die Fig. 3 bis 5 erkennen lassen, besteht der Gefäßdeckel 4 aus einem ersten Deckelabschnitt 7, der in Fig. 3 in der ausgeschwenkten Position dargestellt ist, und aus einem zweiten Deckelabschnitt 8, der im wesentlichen durch den unteren Endabschnitt eines Schachtes 9 bzw. einen den unteren Abschnitt des Schachtes 9 aufnehmenden Rahmen 10 (Fig. 1 und 2) gebildet ist. In Fig. 1 ist der zweiteilige Gefäßdeckel geschlossen, in Fig. 2 ist der den Schacht 9 enthaltende zweite Deckelabschnitt ausgefahren.

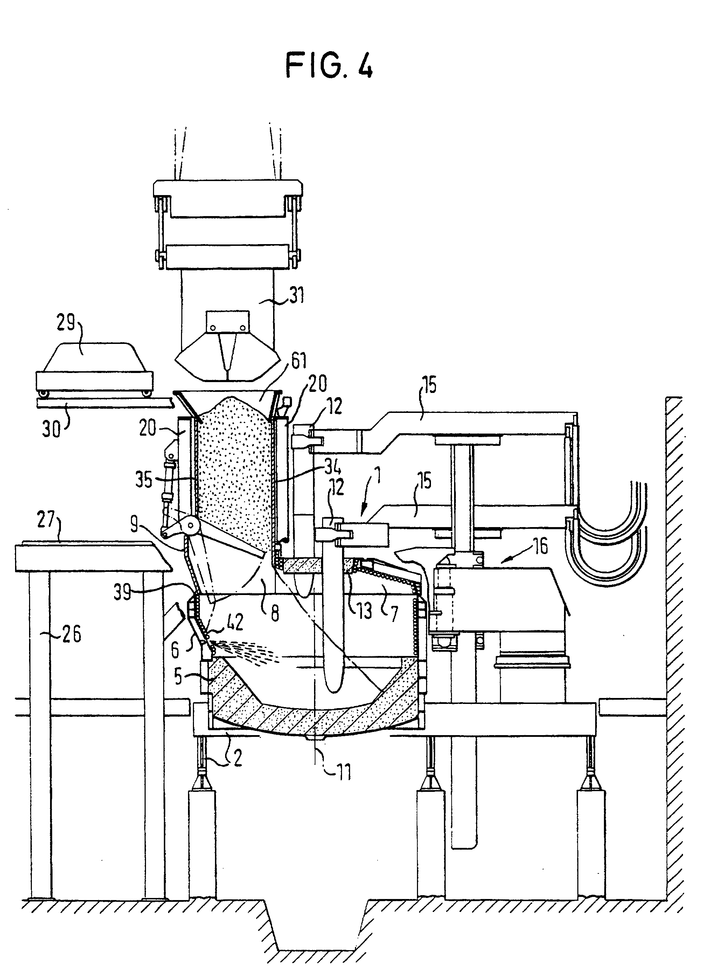

Wie es insbesondere die Fig. 3 bis 5 veranschaulichen, entspricht der in den Zeichnungen rechts von der Mitte des Ofengefäßes dargestellte Teil einem üblichen Lichtbogenofen mit rundem Gefäß und konzentrisch zur Gefäßmitte 11 (Mittelachse des Gefäßes, siehe Fig. 3 und 4) in das Ofengefäß einfahrbaren Elektroden 12. Lediglich der in den Zeichnungen links der Elektroden 12 dargestellte Bereich ist oberhalb des Gefäßunterteils gegenüber der üblichen Ausbildung eines Lichtbogenofens mit runder Gefäßform abgewandelt.

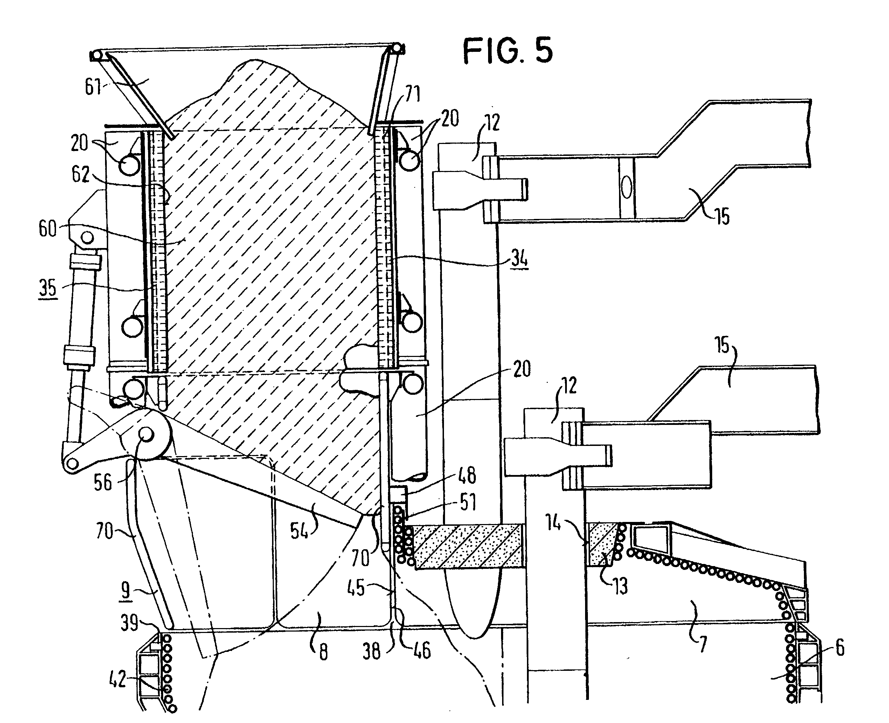

Der erste Deckelabschnitt 7 ist gewölbeartig ausgebildet und weist ein sogenanntes Deckelherz 13 mit Elektrodenöffnungen 14 (Fig. 5) für drei in das Gefäß einzuführende Elektroden 12 in üblicher Dreieckanordnung eines Drehstromlichtbogenofens auf. Die Elektroden 12 sind an Elektrodentragarmen 15 eingespannt und mittels einer Elektrodenhubund -schwenkvorrichtung 16 anhebbar/absenkbar und zur Seite schwenkbar. Der erste Deckelabschnitt 7 ist mittels einer Deckelhub- und -schwenkvorrichtung 17 aus der in den Fig. 4 und 5 dargestellten, auf dem Gefäßrand liegenden Position anhebbar und in die in Fig. 3 dargestellte Position zur Seite schwenkbar, um das Ofengefäß beispielsweise für eine Korbbeschickung von oben freizugeben. Eine geeignete Deckelhub- und -schwenkvorrichtung ist beispielsweise in der EP-0 203 339 beschrieben.

Bei dem Ausführungsbeispiel ist nicht nur das Ofengefäß 3, sondern es sind auch die Deckelhub- und -schwenkvorrichtung 17 sowie die Elektrodenhub- und -schwenkvorrichtung 16 auf die Ofenwiege 2 aufgesetzt, so daß das Ofengefäß gemeinsam mit den Elektroden gekippt werden kann.

Damit bei einem Umbau die Elektrodenanordnung nicht verändert werden muß, ist bei der dargestellten Lösung der erste Deckelabschnitt als durch eine Sehne 18 begrenztes Oval 19 ausgebildet, das die übliche Elektrodenkonfiguration einschließt. Die Sehne 18 muß bei auf dem Ofengefäß aufgesetztem ersten Deckelabschnitt in der Kipprichtung d. h. bei der Darstellung nach Fig. 2 senkrecht zur Papierebene liegen. Damit kann das Ofengefäß mit geschlossenem Deckelabschnitt 7 und ohne Verfahren des Deckelabschnittes 8 zum Abstechen oder Abschlacken gekippt werden. Dabei ist der Schacht 9 nur leicht anzuheben. Auf diese Art werden die Wärmeverluste durch Abstrahlung verringert, bzw. gelangen die heißen Ofengase zum größten Teil in den Vorwärmschacht. Gegebenenfalls kann der beim Anheben des Schachtes 9 zwischen dem unteren Rand des Schachtes bzw. des zweiten Deckelabschnittes 8 und dem Gefäßrand (39 in Fig. 5) entstehende Spalt mittels einer Schürze oder anderer Mittel abgedichtet werden, die am Schacht oder am Gefäßrand angebracht sind.

Der Schacht 9 ist in einer Rahmenkonstruktion 20 befestigt, die den Schacht 9 nach Art eines Käfigs umschließt, wobei der in den Figuren 1 und 2 dargestellte Rahmen 10 des zweiten Deckelabschnittes 8 einen Teil der Rahmenkonstruktion darstellt. Die in den Fig. 5 bis 9 mehr im Detail dargestellte, den Schacht 9 tragende Rahmenkonstruktion 20 ist in einer Haltevorrichtung 21 (siehe Fig. 1 bis 3) derart gelagert, daß die Rahmenkonstruktion 20 gemeinsam mit dem Schacht mittels einer Hubvorrichtung 22 anhebbar und absenkbar ist. Zu diesem Zweck sind an Querbalken 23 der Rahmenkonstruktion Angriffsstellen 24 für die sich an der Haltevorrichtung 21 abstützenden Hubvorrichtungen 22 vorgesehen, so daß der Querbalken 23 und damit die den Schacht tragende Rahmenkonstruktion 20, aus der in Fig. 1 dargestellten unteren Position in die in Fig. 2 dargestellte obere Position anhebbar ist. Durch Führungsstangen 25 wird hierbei die erforderliche Führung gewährleistet.

Die Haltevorrichtung 21 mit Schacht 9 ist horizontal verschiebbar. Zu diesem Zweck sind auf einem Gerüst 26 Schienen 27 vorgesehen, und die Haltevorrichtung 21 ist mit Rädern 28 ausgestattet, die ein Verfahren der Haltevorrichtung 21 in horizontaler Richtung ermöglichen.

Der Schacht 9 ist oben mittels eines Schachtdeckels 29 verschließbar, der bei dem dargestellten Beispiel auf Schienen 30 horizontal verfahrbar ist, um die obere Beschickungsöffnung 61 zum Chargieren mittels eines durch einen Kran transportierten Chargierkorbs 31 (Fig. 4) freizugeben. Der haubenförmig ausgebildete Schachtdeckel 29 weist auf der in Fig. 1 hinteren Seite eine Gasdurchtrittsöffnung 32 auf, die mit einer Abgasleitung 33 verbunden ist, wenn sich der Schacht 9 und damit der Rahmen 10 in der in Fig. 1 dargestellten Position befindet.

Die Fig. 3, 8 und 9 zeigen, daß der Schacht 9 im Querschnitt rechteckig ausgebildet ist. Vorzugsweise ist der Schacht im unteren Bereich rechteckig ausgebildet, wenn Rückhalteorgane für das Einsatzmaterial vorgesehen werden, wie sie weiter unten im einzelnen beschrieben werden. Der Schacht 9 weist somit wenigstens in seinem unteren Bereich rechteckförmig angeordnete Schachtwände auf mit einer bei geschlossenem Gefäßdeckel (Fig. 1, 4 und 5) zur Sehne 18 des ersten Deckelabschnittes 7 benachbarten vorderen Schachtwand 34, einer der Sehne 18 abgewandten hinteren Schachtwand 35 und zwei, diese Wände verbindenden seitlichen Schachtwänden 36 und 37. Die vordere Schachtwand 34 hat hierbei etwa die gleiche Länge wie die Sehne 18, d. h. die Schachtwand 34 grenzt mit einem schmalen Deckelspalt 38 an die Sehne 18 an. Der Deckelspalt ist in Fig. 5 vergrößert dargestellt.

Es soll an dieser Stelle bemerkt werden, daß bei einem gewölbeartigen Gefäßdeckel, wie er in den Figuren 4 und 5 dargestellt ist, die Sehne nur in der Draufsicht eine Gerade ist, sonst aber eine dem Schnitt des Gewölbeprofils folgende Linie und damit auch die Unterkante der vorderen Schachtwand 34 in der gleichen Form ausgebildet ist.

Bei geschlossenem Gefäßdeckel, d. h. bei dem in den Figuren 1, 4 und 5 dargestellten Zustand, wird die Außenkontur des Gefäßdeckels gebildet aus dem unteren Rand der hinteren Schachtwand 35, aus dem unteren Rand der beiden, sich anschließenden seitlichen Schachtwände 36 und 37, sowie dem hieran angrenzenden ovalen Teil 19 des ersten Deckelabschnittes 7. An diese Kontur ist der obere Gefäßrand 39, d. h. der obere Rand des Gefäßoberteils 6, angepaßt. Die Kontur des oberen Gefäßrandes 39 entspricht somit einem durch eine Trapezlinie (Wandsektoren 40a, 41a) begrenzten Oval.

Der Übergang von den durch die Trapezlinie bestimmten Sektoren des Gefäßrandes zum betreffenden Sektor des runden Querschnitts des Gefäßunterteils erfolgt durch einen konvergierenden Wandsektor 42a des Gefäßoberteils 6 (siehe Fig. 3).

Wie bereits erwähnt und in Fig. 5 dargestellt, ist der erste Deckelabschnitt 7 vom zweiten Deckelabschnitt 8 durch einen Spalt 38 getrennt, der parallel zur Sehne 18 verläuft damit das Ofengefäß in der durch die Ofenwiege bestimmten Richtung, in der von der Gefäßmitte 11 aus gesehen ein Abstichloch 43 und eine Arbeitsöffnung 44 angeordnet sind, gekippt werden kann, ohne daß hierdurch eine Behinderung durch die angrenzende vordere Wand 34 des Schachtes 9 auftritt. Da der zweite Deckelabschnitt 8 und damit der Schacht 9 in einer durch das Gerüst 26 getragenen Haltevorrichtung befestigt ist, also nicht auf der Ofenwiege, kann dieser Deckelteil nicht mitkippen. Es genügt aber ein geringfügiges Abheben des unteren Schachtrandes vom oberen Gefäßrand 39, um kleine Kippbewegungen des Ofengefäßes mit aufliegendem ersten Deckelabschnitt und eingefahrenen Elektroden zuzulassen.

Um zu verhindern, daß durch den Spalt 38 zwischen den beiden Deckelabschnitten Ofengase entweichen, sind an wenigstens einem der aneinandergrenzenden Ränder 45 bzw. 46 des ersten bzw. des zweiten Deckelabschnittes Mittel zum Abdichten des Deckelspaltes 38 vorgesehen.

Beim dargestellten Ausführungsbeispiel wird zum Abdichten in den Spalt 38 ein Dichtgas eingeblasen. Zu diesem Zweck ist längs des Randes 46, d. h. an der vorderen Schachtwand 34 ein Kanal 48 mit einer, dem Deckelspalt 38 zugewandten spaltförmigen Düsenöffnung, bzw. einer Lochreihe vorgesehen.

Außerdem ist an dem Rand 45 des ersten Deckelabschnittes eine durch Kühlrohre gebildete Leiste 51 vorgesehen, die bei geschlossenem Deckel mit Spiel in eine Nut eingreift.

Vorzugsweise ist der Schacht 9 mit Rückhalteorganen 54 (Fingern) für das Chargiergut ausgestattet. Die in der WO 95/04910 beschriebene Art von Rückhalteorganen ist hierfür in besonderer Weise geeignet. Je nach Kontur des oberen Gefäßrandes 39, 40, 41 sowie der Ausbildung des konvergierenden Wandsektors 42 bedürfen diese Rückhalteorgane 54 jedoch einer speziellen Ausbildung und Anordnung.

Bei dem dargestellten Ausführungsbeispiel ist der Übergang von einem rechteckigen Querschnitt des Schachtes 9 zu dem runden Querschnitt des Gefäßunterteils 5 über einen Mehreckquerschnitt, der bei diesem Beispiel einer Trapezlinie folgt, gebildet. Der Übergang wird bereits oberhalb des oberen Randes 39 des Gefäßoberteils eingeleitet, indem im unteren, unterhalb der Rückhalteorgane 54 liegenden Schachtabschnitt die Ecken zwischen den Schachtwänden 35 und 36 sowie 35 und 37 zur Gefäßmitte hin konvergierend ausgebildet sind. Die konvergierenden Schachtwandsektoren sind mit 58 und 59 (siehe Fig. 3) bezeichnet. Es sind ebene Flächen, die den Rechteckquerschnitt in ein einer Trapezlinie folgendes Querschnittsprofil der Wände 36, 35 und 37 überführen, das sich dann im Profil des oberen Gefäßrandes 39 durch gerade Abschnitt 40a und 41a wiederspiegelt. Von der im Bereich unterhalb des Schachtes 9 einer Trapezlinie folgenden Kontur des oberen Randes 39 des Gefäßoberteils erfolgt der weitere Übergang zum runden Querschnitt des Gefäßunterteils mittels eines konvergierenden Wandsektors 42a.

Die schwenkbaren Finger 54 sind parallel und im Abstand zueinander angeordnet (vergl. Fig. 3) und in Drehlagern 56 gelagert, die in der Rahmenkonstruktion 20 an der hinteren Schachtwand 35 angeordnet sind. Die schwenkbaren Finger 54 sind aus der in Fig. 5 mit ausgezogener Linie dargestellten Schließstellung, in der die inneren Abschnitte der Finger in den Innenraum des Schachtes ragen und den Durchtritt von Chargiergut versperren, in eine, in Fig. 5 strichpunktiert dargestellte Freigabestellung nach unten schwenkbar, in der die inneren Abschnitte der Finger nach unten weisen und den Durchtritt für das Chargiergut durch den Schacht freigeben. Die schwenkbaren Finger 54 sind auch in der Schließstellung mit einem Winkel von etwa 20 ° gegenüber der Horizontalen schräg nach unten geneigt.

Die oberhalb der Schachtwandsektoren 58 und 59 liegenden Finger 54 können nicht so weit nach unten geschwenkt werden wie die mittleren Finger. In Fig. 3 ist die Freigabestellung der Finger 54 mit ausgezogenen Linien dargestellt, und die Schließstellung gestrichelt. Man sieht, daß jeweils drei zu den Schachtwänden 36 und 37 benachbarte Finger, für die die maximale Öffnungsposition dargestellt ist, nicht so weit nach unten geschwenkt werden können wie die mittleren Finger. Dies setzt eine individuelle Ansteuerung der Schwenkbewegung dieser Finger voraus, während die mittleren Finger gemeinsam verschwenkt werden können.

Beim gemeinsamen Herabschwenken der schwenkbaren Finger 54 aus der Schließstellung in die Freigabestellung wird das Einsatzmaterial durch die schwenkbaren Finger 54 zur Mitte, d. h. in das runde Gefäßunterteil geleitet, so daß der Wandsektor 42 des Gefäßoberteils vor einer zu großen Beanspruchung geschützt ist.

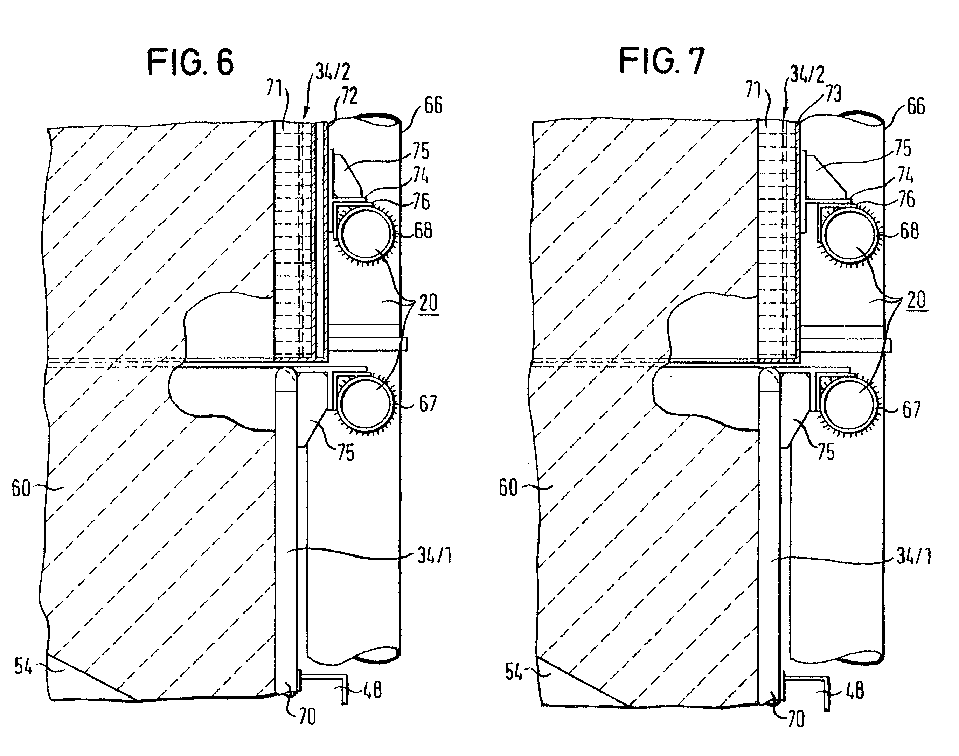

Die Figuren 6 bis 9 lassen neben der Fig. 5 weitere Einzelheiten des Aufbaus und der Anordnung des Schachtes 9 erkennen.

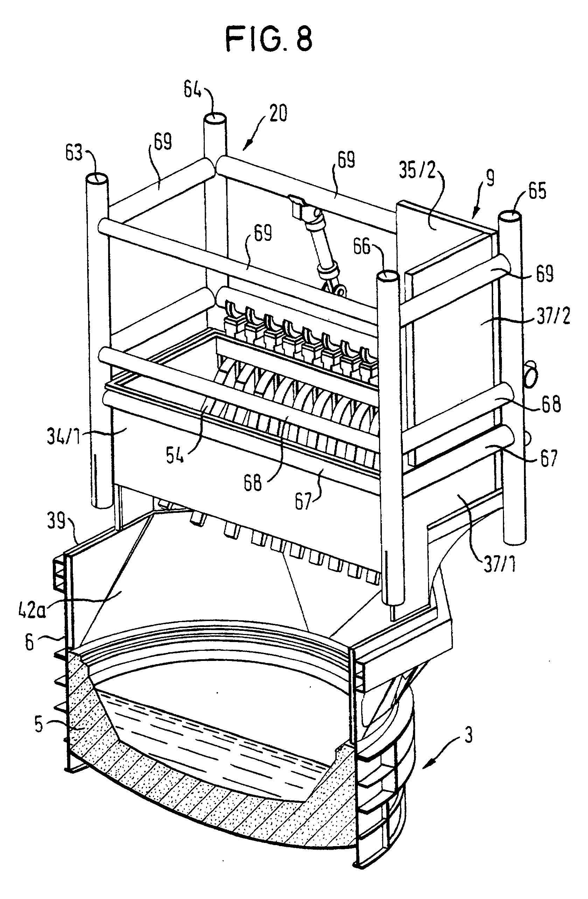

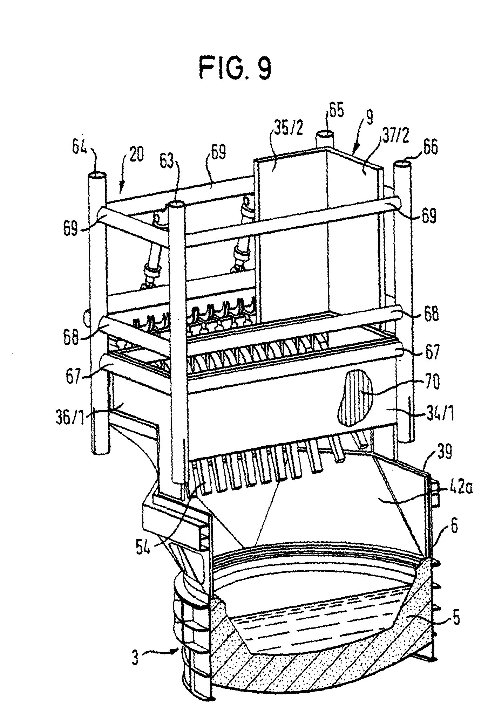

Wie insbesondere die Figuren 8 und 9 zeigen, die zum besseren Verständnis stark vereinfachte, schematisierte Darstellungen der Erfindung wiedergeben, ist der Schacht 9 in einer den Schacht käfigartig umgebenden Rahmenkonstruktion 20 befestigt. Die Rahmenkonstruktion 20 enthält an den Ecken vier senkrechte Rohre 63, 64, 65 und 66, die durch waagrechte Rohre 67, 68 und 69 in einer unteren, mittleren und oberen Ebene zu der käfigartigen Rahmenkonstruktion 20 verschweißt sind. Die Schachtwände 34 bis 37 sind jeweils in untere mit /1 und obere mit /2 bezeichnete Schachtwandabschnitte unterteilt, von denen in den Figuren nur einzelne dargestellt sind. In Fig. 8 sind beispielsweise nur die Schachtwandabschnitte 34/1, 35/2, 37/1 und 37/2 dargestellt. Der hintere Schachtwandabschnitt 35/2 ist hierbei übrigens nochmals in waagrechter Richtung in drei gleich breite Abschnitte unterteilt, von denen in den Figuren 8 und 9 nur jeweils der an die Wand 37 anschließende Schachtwandabschnitt 35/2 gezeigt ist. Die unteren Schachtwandabschnitte 34/1 bis 37/1, welche in dieser Anmeldung als erste Schachtwandabschnitte bezeichnet werden, sind als flüssigkeitsgekühlte Stahlwandelemente in Form von Rohrpanels 70 ausgebildet. Die Rohrpanels 70 besitzen nebeneinander liegende, an den Enden miteinander verbundene Rohrabschnitte, die senkrecht verlaufen, d. h. in Bewegungsrichtung des Einsatzmaterials beim Füllen und Entleeren des Schachtes.

Die oberen Schachtwandabschnitte 34/2 bis 37/2 sind als ff-Wandelemente ausgebildet. Sie weisen auf der dem Aufnahmeraum 62 des Einsatzmaterials 60 zugewandten Innenseite eine Schicht oder Platte 71 aus ff-Material auf. Während die in den Fig. 5 und 6 dargestellten, zweiten Wandabschnitte 34/2 durch ff-Wandelemente 71 gebildet sind, die eine flüssigkeitsgekühlte Außenseite in Form eines Kühlkastens 72 aufweisen, ist der in Fig. 7 dargestellte, zweite Schachtwandabschnitt 34/2 ohne Flüssigkeitskühlung ausgebildet. Das ff-Material ist in eine Blechtafel 73 mit zum Schachtinneren abgewinkelten Rändern eingebracht.

Um die Schachtwandabschnitte schnell auswechseln zu können, weisen sie an ihrer Außenseite winkelförmige Stützflächen 74 auf, die an Stützvorsprüngen 75 angebracht, sind und sich auf winkelförmigen Gegenlagern 76 abstützen, die an geeigneten Stellen der waagrechten Rohre 67, 68 bzw. 69 der Rahmenkonstruktion 20 angeschweißt sind. Entsprechende, einfach lösbare Befestigungen, die ein schnelles, individuelles Auswechseln gestatten, sind sowohl bei den ersten, wie auch bei den zweiten Wandabschnitten vorgesehen.

Beim Beschädigen eines Wandabschnittes kann dieser nach Entleeren und Ausfahren des Schachtes schnell durch einen anderen Wandabschnitt der gleichen Art ersetzt werden. Es ist zweckmäßig, die Wandelemente, soweit es möglich ist, hinsichtlich Größe und lösbarer Befestigungsmöglichkeit in der Rahmenkonstruktion zu normieren, damit die Lagerhaltung auf ein Minimum reduziert werden kann. Die Kühlkreisläufe sollen individuell abschaltbar sein.

Im Hinblick auf die Verringerung der Energieverluste hat es sich auch als vorteilhaft erwiesen, an mechanisch stark beanspruchten Stellen Stahlgußplatten einzusetzen, deren durch wenigstens einen Temperaturfühler erfaßte Temperatur durch eine Zwangskühlung, insbesondere eine Luftkühlung, kurz unterhalb der Temperatur gehalten wird, bei der unter der mechanischen Belastung beim Chargiervorgang eine Verformung der Stahlgußplatte eintritt. Diese Temperatur liegt bei etwa 800°C bis 1 000°C.

## Patentansprüche

1. Chargiergutvorwärmer zum Vorwärmen von in ein Ofengefäß (3) zu chargierendes Einsatzmaterial (60), insbesondere von metallischem Schrott, mit einem in einer Rahmenkonstruktion (20) befestigten Schacht (9), der in seinem oberen Bereich eine verschließbare Beschickungsöffnung (61) für das Einsatzmaterial (60) sowie einen Gasauslaß (32) und in seinem unteren Bereich eine Austrittsöffnung für das Einsatzmaterial (60) sowie einen Gaseinlaß aufweist und dessen vertikalen Schachtwände (34 bis 37) einen Aufnahmeraum (62) für das zu erhitzende Einsatzmaterial (60) begrenzen,
**dadurch gekennzeichnet, daß** wenigstens eine der Schachtwände (34 bis 37) in Schachtwandabschnitte (34/1, 34/2 bis 37/1, 37/2) unterteilt ist, die individuell in der Rahmenkonstruktion (20) befestigt und individuell auswechselbar sind.

2. Chargiergutvorwärmer nach Anspruch 1,
**dadurch gekennzeichnet, daß** die betreffende Schachtwand (34, 35) in senkrechter Richtung in wenigstens zwei übereinander angeordnete Schachtwandabschnitte (34/1, 34/2; 35/1, 35/2) unterteilt ist.

3. Chargiergutvorwärmer nach Anspruch 1 oder 2,
**dadurch gekennzeichnet, daß** die betreffende Schachtwand (34, 35) wenigstens einen ersten Schachtwandabschnitt (34/1, 35/1) enthält, der als Stahlwandelement (70) ausgebildet ist, das durch eine Zwangskühlvorrichtung kühlbar ist.

4. Chargiergutvorwärmer nach Anspruch 3,
**dadurch gekennzeichnet, daß** das Stahlwandelement als flüssigkeitsgekühltes Rohrpanel ausgebildet ist.

5. Chargiergutvorwärmer nach Anspruch 4.
**dadurch gekennzeichnet, daß** das Rohrpanel durch nebeneinander liegende Rohrabschnitte gebildet ist. die parallel zur Bewegungsrichtung des Einsatzmaterials beim Befüllen und Entleeren des Schachtes verlaufen.

6. Chargiergutvorwärmer nach Anspruch 3,
**dadurch gekennzeichnet, daß** das Stahlwandelement als Stahlgußplatte ausgebildet ist und die Temperatur der Stahlgußplatte durch die Zwangskühlvorrichtung abhängig von einem durch wenigstens einen Temperaturfühler erfaßbaren Temperaturmeßwert der Stahlgußplatte steuerbar ist.

7. Chargiergutvorwärmer nach einem der Ansprüche 1 bis 5,
**dadurch gekennzeichnet, daß** die betreffende Schachtwand (34, 35) wenigstens einen zweiten Schachtwandabschnitt (34/2, 35/2) enthält, der als ff-Wandelement ausgebildet ist, das auf der dem Aufnahmeraum (62) des Einsatzmaterials (60) zugewandten Innenseite durch eine Schicht oder Platte (71) aus ff-Material gebildet ist.

8. Chargiergutvorwärmer nach Anspruch 7,
**dadurch gekennzeichnet, daß** das ff-Wandelement eine flüssigkeitsgekühlte Außenseite (72) aufweist.

9. Chargiergutvorwärmer nach Anspruch 7 oder 8,
**dadurch gekennzeichnet, daß** das ff-Wandelement aus einer Blechtafel (73) mit zum Schachtinneren abgewinkelten Rändern gebildet ist, in die eine feuerfeste Auskleidung (71) eingebracht ist.

10. Chargiergutvorwärmer nach einem der Anspruch 3 bis 9,
**dadurch gekennzeichnet, daß** die flüssigkeitsgekühlten Schachtwandabschnitte an individuell abschaltbare Kühlkreisläufe der Zwangskühlvorrichtung anschließbar sind.

11. Chargiergutvorwärmer nach einem der Ansprüche 1 bis 10,
**dadurch gekennzeichnet, daß** die Schachtwandabschnitte (34/1, 34/2; 35/1, 35/2) an ihrer Außenseite Stütztlächen (74) aufweisen, die sich auf Gegenlagern (76) der Rahmenkonstruktion (20) abstützen.

12. Chargiergutvorwärmer nach einem der Ansprüche 1 bis 11,
**dadurch gekennzeichnet, daß** im unteren Bereich des Schachtes (9) erste Schachtwandabschnitte (34/1 bis 37/1) und im oberen Bereich des Schachtes zweite Schachtwandabschnitte (34/2 bis 37/2) vorgesehen sind.

13. Chargiergutvorwärmer nach einem der Ansprüche 1 bis 12,
**dadurch gekennzeichnet, daß** die Rahmenkonstruktion (20) als eine die Schachtwände (34 bis 37) umgebende Käfigkonstruktion (63 bis 69) ausgebildet ist.

14. Chargiergutvorwärmer nach einem der Ansprüche 3 bis 13,
mit einem Schacht (9), der in seinem unteren Bereich Rückhalteorgane (54) für das zu erhitzende Einsatzmaterial aufweist, die durch parallel und im Abstand zueinander angeordnete, in Drehlagern (56) gelagerten Finger (54) gebildet sind, welche aus einer Schließstellung, in der innere Abschnitte der Finger (54) zum Versperren des Druchtrittes von Chargiergut schräg unten geneigt in den Innenraum des Schachtes ragen, in eine Freigabestellung nach unten schwenkbar sind, in der diese Abschnitte der Finger (54) nach unten weisen und den Durchtritt für das Chargiergut freigeben,
**dadurch gekennzeichnet, daß** die den inneren Enden zugewandte Schachtwand (34) im durch die Rückfederung der Finger beim Beschicken des Schachtes mechanisch besonders beanspruchten Bereich einen oder mehrere erste Schachtwandabschnitte enthält.

15. Einschmelzaggregat mit einem Lichtbogenofen (1), der ein Ofengefäß (3) mit einem Gefäßdeckel (4), aus einem ersten und einem zweiten Deckelabschnitt (7, 8) enthält, von denen der erste Deckelabschnitt (7) wenigstens eine Elektrodenöffnung (14) zum Einführen einer Elektrode (12) und der zweite Deckelabschnitt (8) einen in einer Haltevorrichtung (21) befestigten Schacht (9) nach einem der Ansprüche 1 bis 13 enthält.
**dadurch gekennzeichnet, daß** die Haltevorrichtung (21) und das Gefäß (3) relativ zueinander horizontal verschiebbar sind.

16. Einschmelzaggregat nach Anspruch 15,
**dadurch gekennzeichnet, daß** die den Schacht 9 tragende Rahmenkonstruktion (20) anhebbar/absenkbar in der Haltevorrichtung (21) gelagert ist.

## Claims

1. A charging material preheater for preheating charging material (60) which is to be charged into a furnace vessel (3), in particular metal scrap, having a shaft (9) which is fixed in a frame structure (20) and which in its upper region has a closable feed opening (61) for the charging material (60) and a gas outlet (32) and in its lower region a discharge opening for the charging material (60) and a gas inlet, and whose vertical shaft walls (34 to 37) delimit a receiving space (62) for the charging material (60) to be heated,
**characterised in that** at least one of the shaft walls (34 to 37) is subdivided into shaft wall portions (34/1, 34/2 to 37/1, 37/2) which are individually fixed in the frame structure (20) and are individually replaceable.

2. A charging material preheater according to claim 1 **characterised in that** the respective shaft wall (34, 35) is subdivided in a perpendicular direction into at least two shaft wall portions (34/1, 34/2; 35/1, 35/2) which are arranged one above the other.

3. A charging material preheater according to claim 1 or claim 2 **characterised in that** the respective shaft wall (34, 35) includes at least one first shaft wall portion (34/1, 35/1) which is in the form of a steel wall element (70) which can be cooled by a forced cooling apparatus.

4. A charging material preheater according to claim 3 **characterised in that** the steel wall element is in the form of a fluid-cooled tubular panel.

5. A charging material preheater according to claim 4 **characterised in that** the tubular panel is formed by tube portions which are disposed in mutually juxtaposed relationship and which extend parallel to the direction of movement of the charging material upon filling and emptying of the shaft.

6. A charging material preheater according to claim 3 **characterised in that** the steel wall element is in the form of a cast steel plate and the temperature of the cast steel plate is controllable by the forced cooling apparatus in dependence on a temperature measurement value of the cast steel plate, which value can be detected by at least one temperature sensor.

7. A charging material preheater according to one of claims 1 to 5 **characterised in that** the respective shaft wall (34, 35) includes at least one second shaft wall portion (34/2, 35/2) which is in the form of a refractory wall element and which, on the inside which is towards the receiving space (62) for the charging material (60), is formed by a layer or plate (71) of refractory material.

8. A charging material preheater according to claim 7 **characterised in that** the refractory wall element has a fluid-cooled outside (72).

9. A charging material preheater according to claim 7 or claim 8 **characterised in that** the refractory wall element is formed by a sheet metal plate member (73) with edges which are angled towards the shaft interior and into which is fitted a refractory lining (71).

10. A charging material preheater according to one of claims 3 to 9 **characterised in that** the fluid-cooled shaft wall portions are connectable to cooling circuits of the forced cooling apparatus, which can be individually taken out of operation.

11. A charging material preheater according to one of claims 1 to 10 **characterised in that** the shaft wall portions (34/1, 34/2; 35/1, 35/2) have at their outside support surfaces (74) which are supported on cooperating counterpart mountings (76) of the frame structure (20).

12. A charging material preheater according to one of claims 1 to 11 **characterised in that** first shaft wall portions (34/1 to 37/1) are provided in the lower region of the shaft (9) and second shaft wall portions (34/2 to 37/2) are provided in the upper region of the shaft.

13. A charging material preheater according to one of claims 1 to 12 **characterised in that** the frame structure (20) is in the form of a cage structure (63 to 69) which surrounds the shaft walls (34 to 37).

14. A charging material preheater according to one of claims 3 to 13
having a shaft (9) which in its lower region has retaining members (54, 55) for the charging material to be heated, which are formed by fingers (54) which are arranged parallel and at a spacing from each other and which are mounted in rotary mountings (56) and which are pivotable downwardly from a closed position in which inner portions of the fingers (54) project inclinedly downwardly into the interior of the shaft to block the passage of charging material therethrough, into a release position in which said portions of the fingers (54) point downwardly and release the charging material to pass through,
**characterised in that** the shaft wall (34) which is towards the inner ends includes one or more first shaft wall portions in the region which is subjected to a particular mechanical loading due to the resilient return movement of the fingers when the shaft is loaded.

15. A smelting unit having an arc furnace (1) which includes a furnace vessel (3) with a vessel cover (4) comprising first and second cover portions (7, 8) of which the first cover portion (7) includes at least one electrode opening (14) for the introduction of an electrode (12) and the second cover portion (8) includes a shaft (9) according to one of claims 1 to 13, which is fixed in a holding arrangement (21),
**characterised in that** the holding arrangement (21) and the vessel (3) are displaceable horizontally relative to each other.

16. A smelting unit according to claim 15 **characterised in that** the frame structure (20) carrying the shaft (9) is mounted in such a way that it can be raised/lowered in the holding arrangement (21).

## Revendications

1. Dispositif pour préchauffer une charge (60), notamment de ferrailles métalliques, à alimenter dans une carcasse (3) de four, comportant un puits (9), qui est fixé dans une structure (20) de bâti, qui possède dans sa région supérieure une ouverture (61) obturable de chargement pour la charge (60) ainsi qu'une sortie (32) de gaz et dans sa région inférieure une ouverture de sortie pour la charge (60) ainsi qu'une entrée de gaz, et dont les parois (34 à 37) verticales de puits délimitent une chambre (62) réceptrice pour la charge (60) à réchauffer,
**caractérisé en ce qu'**au moins une des parois (34 à 37) de puits est subdivisée en sections (34/1, 34/2 à 37/1, 37/2) de paroi de puits qui sont individuellement fixées dans la structure (20) de bâti et qui peuvent être individuellement remplacées.

2. Dispositif pour préchauffer une charge d'alimentation suivant la revendication 1, **caractérisé en ce que** la paroi (34, 35) de puits concernée est subdivisée en direction verticale en au moins deux sections (34/1, 34/2 ; 35/1, 35/2) superposées de paroi de puits.

3. Dispositif pour préchauffer une charge d'alimentation suivant la revendication 1 ou 2, **caractérisé en ce que** la paroi (34, 35) de puits concernée comporte au moins une première section (34/1, 35/1) de paroi de puits, qui est réalisée sous forme d'élément (70) de paroi en acier qui peut être refroidi par un dispositif de refroidissement forcé.

4. Dispositif pour préchauffer une charge d'alimentation suivant la revendication 3, **caractérisé en ce que** l'élément de paroi en acier est réalisé sous forme de panneau tubulaire refroidi par liquide.

5. Dispositif pour préchauffer une charge d'alimentation suivant la revendication 4, **caractérisé en ce que** le panneau tubulaire est formé par des sections tubulaires juxtaposées, qui s'étendent parallèlement à la direction de déplacement de la charge lors du remplissage et du vidage du puits.

6. Dispositif pour préchauffer une charge d'alimentation suivant la revendication 3, **caractérisé en ce que** l'élément de paroi en acier est réalisé sous forme de plaque en fonte d'acier, et la température de la plaque en fonte d'acier peut, au moyen du dispositif de refroidissement forcé, être dirigée en fonction d'une valeur de mesure de température de la plaque en fonte d'acier qui peut être détectée par au moins une sonde de température.

7. Dispositif pour préchauffer une charge d'alimentation suivant l'une des revendications 1 à 5, **caractérisé en ce que** la paroi (34, 35) de puits concernée comporte au moins une deuxième section (34/2, 35/2) de paroi de puits, qui est réalisée sous forme d'élément de paroi réfractaire qui est formé, sur le côté intérieur tourné vers la chambre (62) recevant la charge (60), par une couche ou plaque (71) en matériau réfractaire.

8. Dispositif pour préchauffer une charge d'alimentation suivant la revendication 7, **caractérisé en ce que** l'élément de paroi réfractaire possède un côté (72) extérieur refroidi par liquide.

9. Dispositif pour préchauffer une charge d'alimentation suivant la revendication 7 ou 8, **caractérisé en ce que** l'élément de paroi réfractaire est formé d'une feuille (73) de tôle dont les bords sont recourbés vers l'intérieur du puits et dans laquelle est insérée une garniture (71) réfractaire.

10. Dispositif pour préchauffer une charge d'alimentation suivant l'une des revendications 3 à 9, **caractérisé en ce que** les sections de paroi de puits refroidies par liquide peuvent être raccordées à des circuits de refroidissement pouvant être individuellement débranchés du dispositif de refroidissement forcé.

11. Dispositif pour préchauffer une charge d'alimentation suivant l'une des revendications 1 à 10, **caractérisé en ce que** les sections (34/1, 34/2; 35/1, 35/2) de paroi de puits comportent sur leur côté extérieur des faces (74) de soutien qui s'appuient sur des contre-appuis (76) de la structure (20) de bâti.

12. Dispositif pour préchauffer une charge d'alimentation suivant l'une des revendications 1 à 11, **caractérisé en ce que** des premières sections (34/1 à 37/1) de paroi de puits sont prévues dans la région inférieure du puits (9) et des deuxièmes sections (34/2 à 37/2) de paroi de puits sont prévues dans la région supérieure du puits.

13. Dispositif pour préchauffer une charge d'alimentation suivant l'une des revendications 1 à 12, **caractérisé en ce que** la structure (20) de bâti est réalisée sous forme de structure (63 à 69) en cage entourant les parois (34 à 37) de puits.

14. Dispositif pour préchauffer une charge d'alimentation suivant l'une des revendications 3 à 13,
comportant un puits (9) qui possède dans sa région inférieure des organes (54) de retenue pour la charge à réchauffer, qui sont formés par des doigts (54) montés dans des paliers (56) rotatifs en étant disposés parallèlement et à distance entre eux, qui peuvent être pivotés vers le bas, d'une position de fermeture dans laquelle des sections intérieures des doigts (54) pénètrent à l'intérieur du puits en étant inclinées en oblique vers le bas afin de bloquer le passage de la charge, dans une position de libération dans laquelle ces sections des doigts (54) sont dirigées vers le bas et libèrent le passage pour la charge,
**caractérisé en ce que** la paroi (34) de puits qui est toumée vers les extrémités intérieures comporte une ou plusieurs premières sections de paroi de puits dans la région mécaniquement particulièrement sollicitée par le rappel élastique des doigts lors du chargement du puits.

15. Equipement de fusion comportant un four (1) à arc, qui comprend une carcasse (3) de four dotée d'un couvercle (4) de carcasse constitué d'une première section (7) de couvercle et d'une deuxième section (8) de couvercle, la première section (7) de couvercle comprenant au moins une ouverture (14) d'électrode pour introduire une électrode (12) et la deuxième section (8) de couvercle comprenant un puits (9) suivant l'une des revendications 1 à 13, fixé dans un dispositif (21) de maintien,
**caractérisé en ce que** le dispositif (21) de maintien et la carcasse (3) peuvent être coulissés horizontalement l'un par rapport à l'autre.

16. Equipement de fusion suivant la revendication 15, **caractérisé en ce que** la structure (20) de bâti qui porte le puits (9) est montée avec possibilité de soulèvement et d'abaissement dans le dispositif (21) de maintien.
